## Europäisches Patentamt
## European Patent Office
## Office européen des brevets

(19)

(11) Numéro de publication: **0 016 843**
**B1**

(12)

# FASCICULE DE BREVET EUROPEEN

(45) Date de publication du fascicule du brevet:
04.06.86

(21) Numéro de dépôt: 79900846.1

(22) Date de dépôt: 20.07.79

(86) Numéro de dépôt international:
**PCT/JP 79/00191**

(87) Numéro de publication internationale:
**WO 80/00267 (21.02.80 Gazette 80/4)**

(51) Int. Cl.⁴: **F 02 D 41/30**, F 02 M 51/02,
**F 02 D 3/02**

(54) Procédé d'injection de combustible pour moteur à combustion interne.

(30) Priorité: 26.07.78 JP 91993/78
21.07.78 JP 88463/78

(43) Date de publication de la demande:
15.10.80 Bulletin 80/21

(45) Mention de la délivrance du brevet:
04.06.86 Bulletin 86/23

(84) Etats contractants désignés:
**FR**

(56) Documents cités:
**FR - A - 1 197 559**
**FR - A - 2 111 068**
**FR - A - 2 189 635**
**FR - A - 2 355 164**
**GB - A - 1 402 626**
**JP - A - 47 013 557**
**JP - A - 48 033 231**
**JP - A - 48 051 133**
**JP - A - 53 115 411**
**JP - B - 13 054 256**
**US - A - 3 661 134**
**US - A - 3 776 208**
**US - A - 3 834 362**
**US - A - 4 132 203**

(73) Titulaire: **Hitachi, Ltd., 5-1, Marunouchi 1-chome,**
**Chiyoda-ku Tokyo 100 (JP)**

(72) Inventeur: **YAMAUCHI, Teruo, 2432-19, Higashiishikawa,**
**Katsuta-shi Ibaraki, 312 (JP)**
Inventeur: **FUJIEDA, Mamoru, 89, Gohei Tomobe-cho,**
**Nishiibaraki-gun Ibaraki 309-17 (JP)**
Inventeur: **OYAMA, Yoshishige,**
**24-18, Higashiohshima-cho 3-chome, Katsuta-shi,**
**Ibaraki 312 (JP)**

(74) Mandataire: **Dupuy, René Gaston et al, Cabinet DUPUY**
**& LOYER 14 rue La Fayette, F-75009 Paris (FR)**

## Description

L'invention concerne d'une façon générale un procédé de commande du système à injection de combustible pour un moteur à combustion interne multicylindré et plus particulièrement une amélioration du procédé de commande du système à injection de combustible d'un type à point unique dans lequel un seul dispositif est prévu en commun pour tous les cylindres.

Jusqu'à présent, on connaît un système d'injection de combustible à multi-points selon lequel un injecteur de combustible est prévu pour chaque cylindre, de manière à ce que l'injection s'effectue dans chacun des cylindres individuels indépendamment l'un de l'autre. Le système à injection multiple de combustible est efficace pour réduire la différence des quantités de combustible alimentées au cylindre individuel de manière à améliorer la caractéristique de sensibilité de l'introduction du combustible du système à injection lors de l'accélération et de la décélération en commandant avec une grande précision la quantité de combustible introduite dans les cylindres individuels.

Cependant, comme un injecteur coûteux de grande précision ainsi qu'un dispositif de commande électronique associé sont nécessaires en nombre correspondant au nombre des cylindres, le système d'injection de combustible à points multiples comporte des coûts de fabrication élevés. De plus, pour obtenir une répartition uniforme de combustible dans les cylindres individuels, les injecteurs doivent être placés de façon adéquate en des endroits précis, ce qui soulève le problème suivant: à savoir que les procédés d'installation ainsi que l'entretien et la vérification sont très compliqués et difficiles.

Pour résoudre ces problèmes, on a proposé un système à injection de combustible en un point unique selon lequel un seul injecteur est disposé en une partie d'entrée d'une tubulure d'admission du moteur et commandé pour injecter le combustible à l'état pulvérisé, de manière à ce que le mélange résultant air-combustible soit réparti dans les cylindres individuels de façon synchrone avec leurs temps d'aspiration (voir à ce sujet le brevet U.S. No 4 132 203 et demande de brevet japonais correspondant No 117125/1978).

Le système à injection à point unique présente l'avantage de ne pas avoir besoin de plus d'un seul injecteur ou d'un dispositif à aiguille d'injection de combustible. Cependant, du fait que l'injection de combustible s'effectue à chaque temps d'aspiration de tous les cylindres individuels, un injecteur coûteux de type à grande vitesse, capable d'être commandé de façon sûre en réponse aux temps d'aspiration des cylindres individuels, est nécessaire pour introduire le mélange combustible-air en rapport uniforme pendant tout un régime du moteur, ce qui bien entendu entraîne des coûts élevés.

De plus, pour obtenir une répartition de combustible uniforme dans les cylindres individuels, la durée de lancement de l'injection de combustible doit être établie avec une grande précision, parce que sans cela un retard peut intervenir dans le transport de combustible aux cylindres, rendant difficile d'obtenir une répartition uniforme de carburant.

Par exemple, dans le cas du système décrit dans le brevet U.S. No 4 132 203, le montage est fait de telle sorte que l'injection de combustible est déclenchée à un instant précédant le point mort supérieur de 15°, en termes d'angle de lancement, à chaque temps d'aspiration des cylindres individuels de manière à obtenir ladite répartition uniforme de combustible. Cependant, il faut noter qu'un débit élevé d'air aspiré est utilisable seulement dans la dernière moitié du temps d'aspiration. A l'instant précédant le point mort supérieur de 15°, en termes d'angle de lancement, le débit d'air a déjà été réduit considérablement.

Ainsi, le combustible injecté au moment où le débit d'air est faible ne peut pas être transporté vers les cylindres à une vitesse d'introduction suffisante et subira un retard, ce qui provoque éventuellement une non-uniformité de répartition du combustible.

De plus, l'injection du combustible est commandée par l'ouverture et la fermeture d'une soupape électromagnétique ou d'un solenoïde. A ce propos, il faut noter que la durée d'ouverture maximale de la soupape et de là l'injection maximale de combustible de l'injecteur, adapté à effectuer les injections pour chaque temps d'aspiration des cylindres individuels, est déterminée à l'avance en prenant en considération les autres dispositifs.

D'autre part, la caractéristique opérationnelle de la valve électromagnétique est telle qu'elle ne répondra pas instantanément au signal d'entrée de commande mais son fonctionnement sera un peu décalé.

En conséquence, dans un régime à grande vitesse du moteur où la durée d'ouverture de la soupape à injection est établie relativement courte, la quantité de combustible injecté ne sera pas proportionnelle à la durée d'ouverture de la soupape à injection et diminuera, si on la compare à un régime à petite vitesse du moteur où la soupape à injection est ouverte pendant une durée relativement longue et ainsi l'influence de la valve électromagnétique sur la relation proportionnelle entre la durée d'ouverture de la soupape de l'injecteur et la quantité de combustible injecté peut être négligée.

Il est donc évident que le système d'injection à point unique de la technique antérieure – tel qu'il est décrit dans le brevet U.S. No 4 132 203 où l'injection de combustible est effectuée à chaque temps d'aspiration des cylindres individuels – ne peut pas échapper à l'inconvénient d'une répartition non-uniforme de combustible ou d'une diminution de la quantité de carburant injecté lors d'un régime à grande vitesse du moteur en raison d'un retard apporté dans le fonctionnement de la soupape électromagnétique.

La présente invention propose un procédé d'injection de combustible pour un moteur à combustion interne comportant une pluralité de paires de cylindres, et un dispositif à soupape d'injection unique servant à envoyer le combustible à la pluralité des cylindres du moteur à combustion, consistant à:

– produire un premier signal indicatif d'au moins un paramètre d'état du moteur relatif au débit d'air d'aspiration, à l'angle du vilebrequin et à la température du fluide de refroidissement,

– mémoriser une donnée de cadencement de l'injection uniforme de combustible afin d'obtenir une distribution uniforme de combustible aux cylindres individuels du moteur en fonction de l'état d'opération ou de fonctionnement de ce dernier,

– déterminer un instant de déclenchement de l'injection de combustible en réponse au premier signal et à la donnée de cadencement uniforme d'allumage,

– injecter le combustible depuis la soupape unique d'injection de combustible à l'instant de déclenchement,

caractérisé en ce que le combustible est injecté en correspondance de chaque groupe de deux courses d'aspiration successives de la pluralité des paires de cylindres et est injecté au voisinage de l'angle de 90° du vilebrequin, après le point mort haut du premier des deux cylindres de la paire effectuant son aspiration.

Brève description des dessins

Les autres objectifs, particularités et avantages de l'invention apparaitront à la lecture de la description suivante et en se référant aux dessins annexés, donnés à titre d'exemples de réalisation, sur lesquels

la fig. 1 montre un montage schématique général d'un moteur à quatre cylindres et à quatre temps muni d'un système à injection de combustible selon un mode de réalisation de l'invention;

la fig. 2 est un graphique montrant la relation entre un angle de lancement du moteur et un débit d'air aspiré passant par un cylindre de commande d'air aspiré;

la fig. 3 est un diagramme de temps destiné à illustrer les relations entre l'angle de rotation de lancement et la durée d'injection du combustible du système selon l'invention;

la fig. 4 est un schéma simplifié montrant la disposition d'un circuit de commande du réglage de l'injection du combustible dans le système de l'invention;

la fig. 5 est un diagramme de signaux illustrant différents signaux qui apparaissent en des points divers du circuit représenté sur la fig. 4;

la fig. 6 illustre graphiquement les données obtenues expérimentalement sur la relation entre l'angle de lancement et la vitesse d'injection du combustible dans le système selon un mode de réalisation de l'invention;

la fig. 7 illustre graphiquement les données obtenues expérimentalement sur la durée du déclenchement de l'injection du carburant dans le système suivant un mode de réalisation de l'invention;

les figs 8A et 8B montrent des montages schématiques de quatre cylindres d'un moteur dans lesquels est introduit le mélange combustible injecté + air;

la fig. 9 illustre graphiquement les données obtenues expérimentalement sur les relations entre l'angle de lancement et des signaux de sortie provenant d'un détecteur d'$O_2$;

la fig. 10 est un diagramme de circuit qui montre le circuit de commande du fonctionnement de l'injection de combustible selon un autre mode de réalisation de l'invention;

la fig. 11 est un diagramme de signaux qui illustre différents signaux apparaissant en divers points du circuit de commande représenté sur la fig. 10; et

la fig. 12 illustre graphiquement les données obtenues expérimentalement sur la répartition du rapport combustible-air dans le système à injection selon un troisième mode de réalisation de l'invention.

Meilleure manière de réaliser l'invention

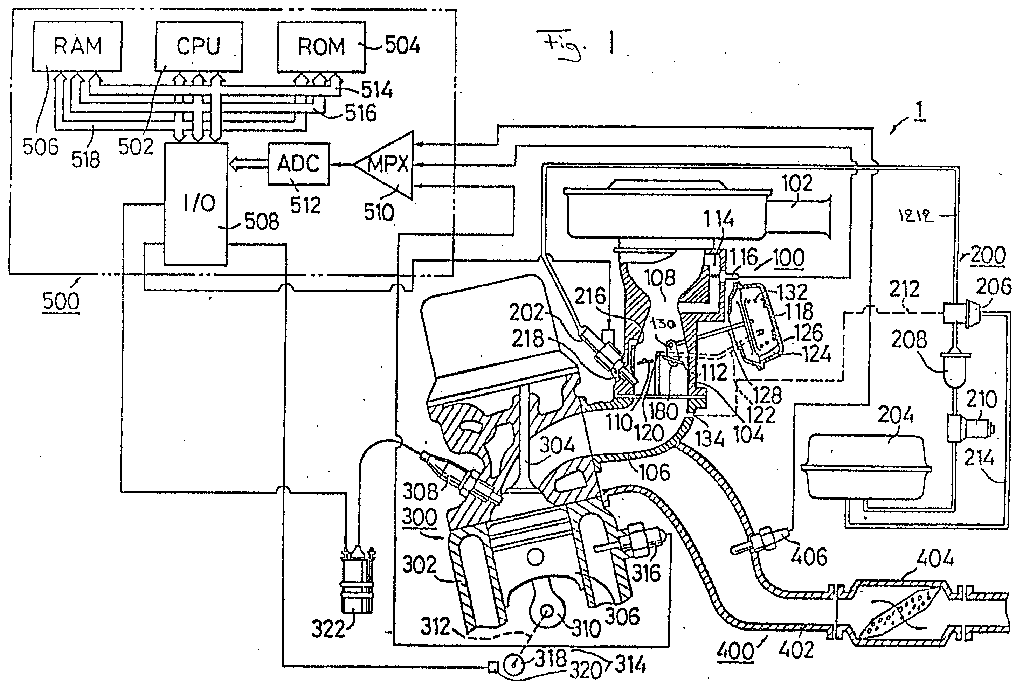

La fig. 1 montre un montage schématique général d'un moteur à combustion interne de type à quatre temps/quatre cylindres.

Sur cette fig. 1, un moteur à combustion interne 1 (abrégé ci-après simplement en «moteur») comprend, d'une façon générale, un système 100 destiné à mesurer une quantité d'air d'appel ou air aspiré, un système 200 d'introduction d'une quantité mesurée de combustible de manière à former un mélange gazeux avec l'air aspiré, un système de combustion 300 dans lequel le mélange gazeux combustible-air subit une combustion, un système d'échappement 400 qui libère dans l'atmosphère les produits gazeux de la combustion et un système de commande 500 relié électriquement aux systèmes 100, 200, 300 et 400.

Le système de mesure 100 de l'air aspiré comprend un filtre à air 102 qui purifie l'air provenant de l'extérieur, un cylindre de mesure 104 de l'air aspiré qui règle la quantité d'air aspiré en fonction des conditions opérationnelles du moteur, et un conduit 106 d'air aspiré qui relie la système 100 au système 300.

Dans le cylindre de mesure 104 de l'air aspiré est formé un tube de Venturi 108 en aval duquel sont disposés des papillons 110 et 112 à l'intérieur du cylindre de mesure 104. Un conduit de dérivation d'air 114 est formé dans une paroi latérale du cylindre 104 en amont des papillons 110 et 112, et son orifice de sortie s'ouvre à l'intérieur du cylindre de mesure 104 au voisinage de la partie la plus étroite du tube de Venturi 108. L'orifice d'entrée du conduit de dérivation d'air 114 est ouvert en un endroit situé en amont du tube de Venturi 108.

Dans le conduit de dérivation d'air 114 se trouve un détecteur à fil chaud, chauffé à température constante prédéterminée et constituant un détecteur d'arrivée d'air. La borne de sortie électrique du détecteur à fil chaud 116 est reliée au système de commande 500 mentionné ci-dessus.

Le papillon 110 est couplé mécaniquement avec une pédale d'accélération d'un véhicule à moteur et adapté pour être actionné par un opérateur ou un conducteur. D'autre part, le papillon 112 est disposé de manière à être commandé par un dispositif à diaphragme 118.

Le dispositif à diaphragme 118 comprend une chambre 124 de dépression, divisée par un élément détendeur 126 et alimentée en une pression d'air aspiré captée par un orifice 120 en un point intermédiaire situé entre le tube de Venturi 108 et les papillons 110, 112 grâce à un passage 122 indiqué en pointillés. L'élément détendeur 126 constitué par un diaphragme est relié de façon pivotante à une extrémité d'un bras de levier rotatif 130 par l'intermédiaire d'une tige de raccordement 128. Le bras de levier 130 est monté de façon fixe sur un arbre rotatif auquel est aussi fixé le papillon 112. L'élément détendeur 126 est constamment tendu sous l'influence d'un ressort en spirale 132 disposé à l'intérieur de la chambre de dépression 124.

Le système 200 d'alimentation en combustible comprend un dispositif 202 à soupape d'injection unique qui introduit le combustible dans le cylindre de mesure 104 par le conduit d'admission 106 et un réservoir ou récipient à combustible 204 qui est relié au dispositif 202 par l'intermédiaire d'un tuyau 212, un régulateur de pression du combustible 206, un filtre 208 et une pompe à combustible 210.

Le régulateur 206 est relié à un orifice de captage de pression 134 prévu dans le conduit d'admission 106 par l'intermédiaire d'un tuyau 212 et d'autre part est relié au réservoir 204 par un tuyau de retour 214. Grâce à ce montage, la réinjection du combustible du régulateur 206 au réservoir 204 par le tuyau de retour 214 est réalisée de sorte que la différence entre la pression à l'intérieur du conduit d'admission 106 où est injecté le combustible du dispositif 202 et la pression de combustible alimenté audit dispositif est toujours maintenue à un niveau constant prédéterminé.

Il faut noter que seul le dispositif 202 est prévu dans le cylindre 104 de mesure de l'air aspiré en une position située au voisinage de l'orifice de sortie d'un conduit de dérivation 216 formé dans la paroi latérale du cylindre de mesure 104 et s'étendant à travers le papillon 110. Autour d'une partie extrême pointue du dispositif 202 se trouve un guide-conduit 218 qui sert à guider le combustible injecté dans le conduit d'admission 106 de telle manière que le courant de combustible injecté est protégé par un courant d'air introduit par le conduit de dérivation 216.

la commande du dispositif-valve d'injection de carburant 202 par rapport au réglage de l'injection et de la durée de cette injection est effectuée par un signal électrique provenant du système de commande 500 et appliqué à une soupape électromagnétique ou un solénoïde incorporé dans ledit dispositif 202, comme on le décrira plus bas.

Le système de combustion 300 comprend des soupapes de chargement 304 qui introduisent le mélange combustible-air provenant du conduit ou tubulure d'admission 106 dans les cylindres respectifs 302 dont chacun est muni d'un piston 306 servant à comprimer le mélange combustible-air à l'intérieur du cylindre associé 302 et d'une bougie d'allumage 308 destinée à produire une étincelle pour enflammer le mélange combustible-air, un vilbrequin 312 relié au piston 306 par des tiges respectives 310, un détecteur d'angle de lancement 314 qui détecte l'angle rotationnel du vilebrequin 312 et un détecteur de la température de refroidissement 316 qui détecte la température du réfrigérant ou de l'eau de refroidissement utilisé pour refroidir les cylindres 302.

Le détecteur 314 de l'angle de lancement est composé d'une poulie 318 qui tourne avec le vilebrequin 312, d'un capteur 320 de l'angle de lancement et fonctionne de manière à produire un signal d'angle de référence (CRP) à chaque angle de lancement de référence et un signal de position (CPP) à chaque angle prédéterminé (par exemple tous les 0,5°), ces signaux étant fonction du nombre de tours du moteur. Ces deux signaux de sortie du détecteur 314 sont appliqués au système de commande 500.

Les bougies d'allumage 308 sont électriquement reliées à une bobine d'allumage 322 qui à son tour est connectée électriquement au système de commande 500.

Le détecteur de température 316 est relié électriquement au système de commande 500.

Le système 400 des gaz d'échappement comprend un tuyau d'échappement 402 qui décharge les gaz d'échappement provenant de la combustion du mélange combustible-air, et un tube catalyseur 404 relié au tuyau d'échappement 402 et contenant des catalyseurs qui éliminent les gaz toxiques comme le CO, HC ou analogues pour purifier les gaz d'échappement.

Dans le tuyau d'échappement 402, en amont du tube catalyseur 404, se trouve un détecteur d'$O_2$ 406 relié électriquement au système de commande 500.

Ce système de commande 500 comporte une unité centrale de traitement (CPU) 502 qui exécute des traitements opérationnels numériques, une mémoire morte ou ROM 504 qui mémorise des programmes de gestion pour le CPU et des données fixes, une mémoire à accès sélectif ou RAM 506 qui permet la lecture et l'écriture de données, et un circuit intermédiaire d'entrée/sortie 508 dont la fonction est de recevoir des signaux d'entrée des différents détecteurs décrits ci-dessus pour envoyer les signaux au CPU 502 et renvoyer les signaux de données du CPU 502 au dispositif-valve d'injection de combustible 202 et à la bobine d'allumage 322.

Les signaux d'entrée au circuit intermédiaire d'entrée/sortie 508, provenant des divers détecteurs, peuvent être généralement classés ainsi:

Signaux d'entrée analogiques disponibles du détecteur à fil chaud 116, du détecteur de la température du réfrigérant 316 et du détecteur 406 de $O_2$.

Signaux de train d'impulsions comme le signal d'angle de référence (CRP) et le signal de position (CPP) disponibles du détecteur d'angles de lancement 314.

Les signaux d'entrée analogiques sont appliqués au circuit intermédiaire d'entrée/sortie 508 par un multiplexeur (MPX) 510 qui sélectionne les signaux d'entrée sur la base d'un partage du temps et un convertisseur analogique/numérique (A–O) 512 qui convertit les signaux analogiques du MPX 510 en signaux numériques correspondants.

Il faut noter que le signal train d'impulsions CRP est produit tous les 190° de l'angle de lancement dans le cas d'un moteur à quatre cylindres, à chaque angle de lancement de 120° dans le cas d'un moteur à six cylindres et tous les 90° de l'angle de lancement dans le cas d'un moteur à huit cylindres. D'autre part, le signal de position CPP peut être produit à chaque angle de lancement de 0,5°, par exemple.

Le CPU 502, le ROM 504, le RAM 506 et le circuit intermédiaire d'entrée/sortie 508 sont reliés électriquement l'une à l'autre par un bus de données 514, un bus de commande 516 et un bus d'adresses 518.

Les signaux du CPU 502 sont appliqués au dispositif valve d'injection de combustible 202 et à la bobine d'allumage 322 par l'intermédiaire du circuit intermédiaire d'entrée/sortie 508.

Le dispositif valve d'injection de combustible 202 comprend une bobine électromagnétique ou solénoïde qui commande la value électromagnétique incorporée ou solénoïde, bobine dont une extrémité est reliée à une borne d'alimentation (non représentée), tandis que son autre extrémité est reliée au circuit intermédiaire d'entrée/sortie 508, de manière à commander le flux de courant électrique dans l'appareil à valve d'injection de combustible 202.

On va décrire maintenant le fonctionnement du système moteur 1 du montage ci-dessus.

L'air aspiré est introduit dans le cylindre de mesure 104 après avoir été purifié par le filtre à air 102, de manière à ce qu'une quantité d'air soit introduite dans le conduit de dérivation 114 proportionnellement à la quantité d'air aspiré due à und dépression produite dans le tube de Venturi 108. Aussi, le détecteur à fil chaud 116 est refroidi, et un courant accru est exigé pour chauffer ce détecteur 116 à la température prédéterminée. Toute la quantité d'air aspiré peut être évaluée sur la base de l'énergie électrique fournie au détecteur à fil chaud 116.

Le signal analogique du détecteur à fil chaud 116 est choisi par le MPX 510 sur la base d'un partage de temps et appliqué au circuit intermédiaire d'entrée/sortie 508 après avoir été converti en un signal numérique correspondant par le convertisseur A–D 512.

Les relations entre les besoins d'énergie (ou demandes de courant) du détecteur à fil chaud décrit ci-dessus et la quantité d'air aspiré sont mémorisées au préalable dans le ROM 504, dans lequel le signal d'entrée représentant une telle relation et appliqué au circuit intermédiaire d'entré/sortie 508 est utilisé comme signal de commande pour déterminer la synchronisation du déclenchement de l'injection de combustible par l'intermédiaire du dispositif 202, de la manière décrite ci-dessous.

L'air aspiré qui a traversé le tube de Venturi 108 passe dans le conduit d'admission 106 par les papillons 110 et 112. A cet égard, il faut noter que les fonctionnements de ces papillons 110 et 112 dépendent de l'état de fonctionnement ou de marche du moteur 1, selon lequel seul le papillon 110 est ouvert en régime à petite vitesse, tandis que le papillon 112 est ouvert simultanément avec le papillon 110 en régime à grande vitesse sous commande du diaphragme 118.

Comme la pression de l'air aspiré, dominant dans la zone intermédiaire entre le tube de Venturi 108 et les papillons 110, 112 est rassemblée à l'orifice d'entrée 120 et introduite dans la chambre de dépression 124 du diaphragme 118 par le conduit indiqué en pointillés, la tige conductrice 128 sera alors déplacée contre la force de tension du ressort 132 quand la dépression à l'intérieur de la chambre 124 dépasse un niveau de dépression prédéterminé. En conséquence, le bras de levier 130 relié de façon pivotante à la tige conductrice 128 en sa partie extrême de projection pivote de manière à ouvrir le papillon 112 fixé à l'arbre rotatif du bras de levier 130.

De plus, en raison de la position du détecteur à fil chaud 116 à l'intérieur du conduit de dérivation 114, le détecteur 116 est protégé d'un gaz à haute température produit lors du retour d'allumage ou retour de flamme dans le cylindre 302. En outre, le détecteur à fil chaud est aussi protégé contre les poussières ou substances étrangères analogues contenues dans l'air aspiré.

Le combustible liquide contenu dans le réservoir 204 est aspiré par la pompe à combustible 210 et introduit dans le régulateur de pression 206 après en avoir éliminé par le filtre les poussières ou particules étrangères analogues. Le régulateur de pression de combustible 206 répond à la pression située à l'intérieur du conduit d'admission 106 par l'intermédiaire du conduit de pression 212, de manière à régler la pression de combustible introduit dans la soupape à injection 202.

Le combustible liquide ainsi réglé de manière à obtenir une différence prédéterminée par rapport à la pression à l'intérieur du conduit d'admission 106 est injecté dans ce conduit 106 en une quantité proportionnelle à la durée d'ouverture de la soupape à injection de carburant 202. Du fait que l'intervalle durant lequel la soupape à injection est ouverte, soit déterminé par le système de commande 500 de la manière décrite plus bas, une quantité du combustible proportionnelle à la quantité d'air aspiré est injectée dans le conduit d'admission sous forme pulvérisée de façon à former le mélange combustible-air.

Le mélange combustible-air chargé dans le cylindre 302 par la soupape 304 est comprimé par le piston associé 308 et subit une combustion enflammée par l'étincelle produite par la bougie d'allumage 308, ce qui a pour résultat de provoquer un va-et-vient du piston 306 à l'intérieur du cylindre 302 qui subit ensuite un mouvement rotationnel correspondant de translation par l'intermédiaire du vilebrequin 312.

L'angle rotationnel du vilebrequin 312 est détecté par le détecteur 314 qui produit le signal d'angle de référence CRP et le signal de position CPP à chaque angle de lancement de référence et à chaque angle de lancement prédéterminé, par exemple tous les 0,5°, respectivement. Ces deux signaux sont transmis au circuit intermédiaire d'entrée/sortie 508 du système de commande 500 et utilisés comme signaux de commande pour déterminer la durée du déclenchement de l'injection de combustible par l'intermédiaire du dispositif 202 de la manière dècrite ci-après.

Le cylindre 302 est refroidi par le réfrigérant ou l'eau du refroidissement dont la température est mesurée par le détecteur de température du réfrigérant. Le signal représentatif de la soupape de température mesurée est appliqué au circuit intermédiaire d'entrée/sortie du système de commande 500 par le MPX 510 et le convertisseur A–D 512, signal qui sera utilisé comme signal de commande de l'injection de combustible du dispositif 202, comme on le décrira ci-après.

La bougie d'allumage 308 est alimentée en haute tension provenant de la bobine d'allumage dans un réglage propre de l'allumage. Le signal d'entrée de commande de la bobine d'allumage 322 est fourni du CPU 502 par le circuit intermédiaire d'entrée/sortie 508.

Le gaz d'échappement provenant de la combustion est introduit dans le tuyau 402 et déchargé dans l'atmosphère après élimination des composants toxiques tels que le CO, HC ou analogues sous l'action du tube catalyseur 404.

Le détecteur de $O_2$ 406 placé dans le tuyau d'échappement 402 en amont du tube catalyseur 404 sert à détecter la composition du gaz d'échappement. Le signal de sortie du détecteur d'$O_2$ représente ainsi l'applicabilité des conditions d'alimentation en combustible dans le moteur, c'est-à-dire, si le rapport combustible-air du mélange est optimum ou non, et il est envoyé au circuit intermédiaire d'entrée/sortie 508 du système de commande 500 par le MPX 510 et le convertisseur 512, signal qui sera utilisé comme signal de commande de l'injection de combustible du dispositif 202 de la manière décrite ci-dessous.

Le CPU 502 exécute un traitement opérationnel numérique pour commander l'injection de combustible suivant les différents signaux des détecteurs individuels décrits ci-dessus.

Le programme de commande de l'injection ainsi que les données de durée d'injection optimale, nécessaires à l'exécution du programmecidessus, sont mémorisés dans le ROM 504. Le terme «durée d'injection optimale» signifie la durée d'injection de combustible qui est la meilleure pour obtenir une répartition uniforme du combustible dans les cylindres individuels du moteur en fonction des conditions de fonctionnement ou de mise en marche de ce moteur 1.

La donnée de cette caractéristique durée d'injection optimale est mémorisée dans le ROM de manière à être lue par une recherche topographique dès extraction des signaux représentatifs des conditions de mise en marche du moteur.

A ce propos, le circuit intermédiaire d'entrée-sortie 508 extrait les signaux représentatifs des conditions de fonctionnement du moteur comme le signal du débit d'air provenant du détenteur à fil chaud 116, le signal d'angle de référence CRP et le signal de position CPP provenant du détecteur d'angle de lancement 314, par exemple, et transfère ces signaux au CPU 502 où la synchronisation ainsi que la durée de l'injection sont déterminées par une opération arithmétique des signaux de mesure appliqués de manière à obtenir la répartition optimale de combustion décrite ci-dessus. L'impulsion ou signal discret ainsi produit du CPU 502 et représentatif de la synchronisation ainsi que de la durée d'injection est appliqué au dispositif 202 comme signal de commande.

Plus particulièrement, le CPU 502 répond aux signaux représentatifs des conditions de fonctionnement du moteur 1 et extrait du ROM 504 la donnée de la synchronisation optimale d'injection correspondant à la quantité nécessaire d'injection de combustible par une recherche topographique. Les conditions de fonctionnement qui sont nécessaires au préalable pour déterminer la synchronisation d'injection sont représentées par des données telles que le débit d'air aspiré, l'angle de lancement, la température du réfrigérant ou analogues.

En conséquence, la synchronisation pour ouvrir la valve solenoïde du dispositif 202 correspond littéralement à la synchronisation déclenchant l'injection qui est déterminée par le traitement opérationnel du CPU 502, tandis que le moment où la soupape à injection de combustible est fermée correspond à la fin de la durée d'injection du combustible.

Bien qu'on ait supposé que la donnée de synchronisation optimale d'injection de combustible nécessaire pour obtenir une répartition uniforme dans les cylindres individuels soit obtenue du ROM 504 par recherche topographique, on appréciera que le même effet peut aussi être obtenu en déterminant la synchronisation optimale d'injection à partir de la quantité demandée d'injection de combustible par une opération du CPU 502.

La description portera maintenant sur les fonctionnements de commande pour déterminer la synchronisation déclenchant l'injection de combustible et la durée de cette injection (C'est-à-dire l'intervalle de temps durant lequel la soupape à injection de combustible du dispositif 202 est ouverte) du dispositif 202 du système moteur décrit dans le montage ci-dessus.

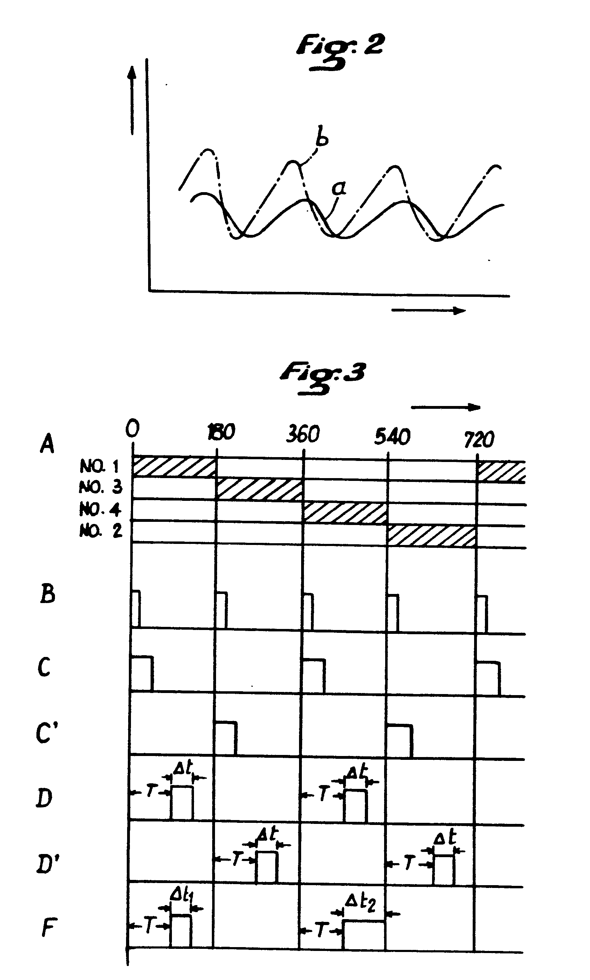

En se référant à la fig. 2 qui illustre graphiquement les relations entre l'angle de lancement du moteur 1 et le débit d'air aspiré au tube de Venturi 108 (le nombre de tours du moteur étant adopté comme paramètre), la courbe en trait plein a représente la relation dans le cas où le moteur 1 est actionné à petite vitesse, tandis que la courbe en pointillés b représente les conditions de fonctionnement d'un moteur à grande vitesse. Sur cette fig. 2, le débit d'air aspiré varie en fonction du nombre de tours du moteur et de l'angle de lancement. La qualité d'air aspiré en un seul temps d'aspiration est proportionnelle à la zone d'un seul profil d'ondes.

Le débit d'air aspiré est donc détecté par le détecteur à fil chaud 116 à chaque accroissement prédéterminé de l'angle de lancement du moteur 1. Le signal de sortie du détecteur à fil chaud 116 est appliqué au CPU 502 par le circuit intermédiaire d'entrée/sortie 508 ainsi que le signal représentatif du nombre de tours du moteur, détecté par le détecteur d'angle de lancement 314. D'autre part, le ROM 504 mémorise la donnée de synchronisation optimale d'injection de combustible pour améliorer la répartition de ce combustible dans les cylindres du moteur en fonction des deux variables débit d'air aspiré et nombre de tours du moteur. Sur la base de ces données mémorisées dans le ROM 504, la synchronisation optimale ainsi que la durée d'injection du combustible nécessaire à une répartition uniforme de ce dernier dans les cylindres individuels sont déterminées suivant le programme de gestion. La commande d'ouverture et de fermeture du dispositif 202 est effectuée par le signal représentatif de ces valeurs ainsi déterminées.

Comme le signal du débit d'air aspiré, mesuré à l'angle de lancement prédéterminé, est susceptible de subir des variations dues aux déviations dans les synchronisations d'exécution des soupapes de chargement et de déchargement des cylindres du moteur, à la variation de la pression interne du tuyau d'échappement 402 ou de facteurs analogues, le taux de la teneur en oxygène du gaz d'échappement est détecté par le détecteur 406 disposé dans ce tuyau d'échappement 402 et utilisé pour corriger la durée d'injection du combustible.

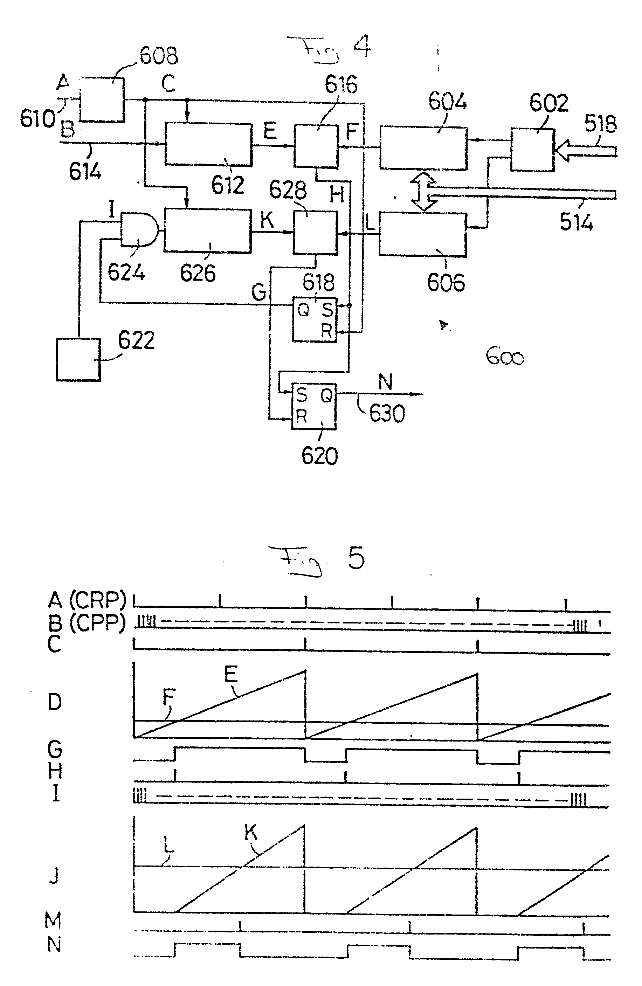

La fig. 3 illustre les relations entre la synchronisation d'injection du combustible pour le dispositif 202 et l'angle de rotation de lancement pour le moteur 1 à quatre cylindres représenté sur la fig. 1.

En A sur la fig. 3, l'angle rotationnel de lancement du vilbrequin 312 du moteur 1 est pris en abscisses, tandis que l'ordre des temps d'aspiration dans les cylindres individuels du moteur est pris en ordonnées, le temps d'aspiration des cylindres individuels étant indiqué en zones hachurées.

Comme on peut le voir sur la fig. 3 en A, les temps d'aspiration du moteur 1 interviennent à chaque 180° de l'angle de lancement. Plus particulièrement, le temps d'aspiration du cylindre No 1 intervient dans l'invervalle 0°–180°. Le temps d'aspiration du troisième cylindre No 3 intervient entre 180 et 360°, tandis que celui du quatrième cylindre No 4 intervient entre 360 et 540°. Le temps d'aspiration du second cylindre No 2 intervient entre 540 et 720°. Le temps d'aspiration des cylindres individuels est de plus répété dans cet ordre.

En B sur la fig. 3, sont représentées les impulsions du signal d'angle de lancement de référence produit par le détecteur 314 chaque fois que l'angle de lancement augmente de 180°.

Dans le dispositif à injection de combustible du présent mode de réalisation de l'invention, l'injection de combustible est déclenchée en synchronisme intermittent avec l'apparition des impulsions d'angle de lancement de référence comme on le représente en C ou C' sur la fig. 3. En d'autres termes, l'injection de combustible est déclenchée en synchronisme avec le début de chaque temps d'aspiration, en séries des temps d'aspiration successifs des cylindres individuels dans l'ordre décrit précédemment. Grâce à un tel choix de synchronisation, la durée nécessaire et suffisante pour l'injection de combustible par le dispositif 202 peut être assurée, et il n'est donc pas nécessaire de disposer d'un dispositif coûteux d'injection de combustible de structure compliquée. En d'autres termes, il est possible d'utiliser un dispositif classique peu coûteux d'injection de combustible. De plus, on peut obtenir une répartition adéquate ou uniforme de combustible dans les cylindres individuels du moteur, en raison de la réduction d'influence due au retard de fonctionnement du solenoïde incorporé dans le dispositif 202. En outre, comme la fréquence à laquelle est réalisée l'injection du combustible est réduite de moitié par rapport à la fréquence d'injection requise dans les systèmes connus, la durée d'utilisation du dispositif d'injection de combustible ainsi que les éléments associés sera accrue de manière significative.

A ce propos, il faut noter que la durée d'injection du dispositif 202 est déterminée sur la base des résultats des traitements opérationnels des données mesurées exécutées par le système de commande 500, comme on le décrit ci-dessous en détails.

Dans l'injection de combustible réalisée en synchronisme intermittent avec les impulsions de synchronisation d'injection, c'est-à-dire les impulsions d'angle de lancement de référence, décrites ci-dessus, il est nécessaire de considérer l'instant où l'injection est déclenchée pour faire varier le débit d'air aspiré, représenté sur la fig. 2.

Après diverses expériences, les inventeurs de la présente demande ont trouvé que l'injection de combustible la plus efficace devait être déclenchée au moment où le débit d'air est le plus élevé, c'est-à-dire, après un laps de temps (ou d'angle) prédéterminé T à partir de l'impulsion d'angle de lancement de référence (figs 3, D ou D').

Quand la synchronisation est établie de telle sorte que l'injection de combustible intervienne une fois tous les deux temps d'aspiration, la durée d'ouverture de la soupape à injection de combustible 202 peut être assurée de façon adéquate, de manière à réaliser une répartition uniforme de combustible dans les cylindres du moteur et ce pendant tout le régime de ce dernier.

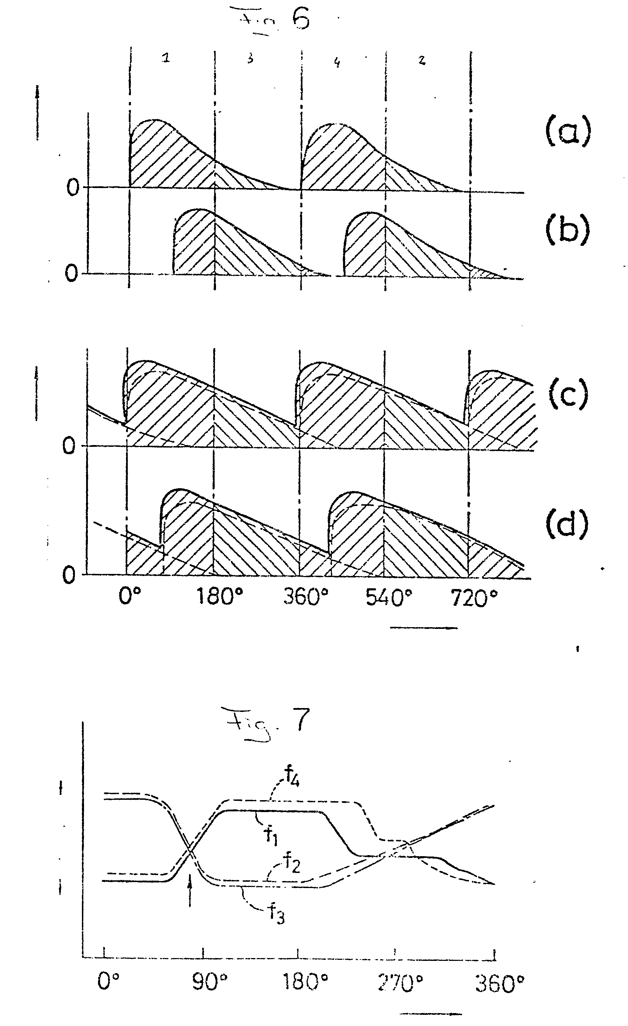

On va décrire maintenant la synchronisation et la durée d'injection du combustible, en se référant au circuit de commande d'injection 600 représenté sur les figures 4 et 5 pour positionner ces facteurs au dispositif 202. Le circuit de commande d'injection 600 représenté sur la fig. 4 est incorporé dans le circuit intermédiaire d'entrée/sortie 508 du système de commande 500 représenté sur la fig. 1. La fig. 5 représente des formes d'ondes de différents signaux produits en divers points du circuit représenté sur la fig. 4. La relation entre les signaux et les points du circuit où ils apparaissent est représentée par les mêmes lettres de référence à l'exception de D et J.

En se référant à la fig. 4, un décodeur d'adresses 602 est relié au CPU 502 par le bus d'adresses 518. Quand la sortie du signal d'adresses provenant du CPU 502 est appliquée au décodeur 602, un registre déclencheur de l'injection 604 et un registre de durée d'injection 606 sont désignés.

Le registre de déclenchement d'injection 604 et le registre de durée d'injection 606 sont reliés au CPU 502 par le bus de données 514. Le registre 604 sert à positionner la donnée de synchronisation optimale d'injection pour améliorer le rapport de répartition du combustible tel qu'il est déterminé par le CPU 502 en fonction des conditions de fonctionnement du moteur. D'autre part, le registre 605 positionne la donnée de durée d'injection pour une quantité prédéterminée de combustible injecté telle qu'elle est déterminée par le CPU 502 en fonction des conditions de fonctionnement du moteur.

Un circuit générateur 608 produit une impulsion initiale représentée sur la fig. 5 en C pour fournir un instant de référence de la synchronisation déclenchant l'injection à partir du signal d'impulsion d'angle de lancement de référence CRP (représentés respectivement sur les figures 3 et 5 en V et A), appliqué à la borne d'entrée 610. Il faut noter que l'impulsion initiale correspond au point mort supérieur des pistons dans les cylindres associés.

Un rythmeur de déclenchement d'injection 612 sert à compter les impulsions de positionnement CPP (voir fig. 5 en B) appliquées à la borne d'entrée 614 du détecteur d'angle de lancement 314 de manière à produire un signal de temps E représenté en D sur la fig. 5. Le rythmeur de déclenchement d'injection 612 est alimenté par l'impulsion de sortie du circuit générateur 608 sous forme d'un signal de restauration.

Le signal de sortie E du rythmeur 612 est appliqué au comparateur 616 ainsi que le signal de sortie F du registre 604. Le signal de sortie F du registre 604 est établi de manière à être utilisé comme valeur de référence pour la comparaison dans le comparateur 616 comme on l'indique en D sur la fig. 5.

En conséquence, quand la sortie E de comptage de rythmeur 612 augmente au-delà du signal de sortie F du registre 604, le comparateur 616 produit une impulsion de sortie représentée en H sur la fig. 5. L'impulsion de sortie H du comparateur 616 est appliquée à une borne de positionnement d'un circuit à bascule bistable 618 qui sert à fournir une des conditions pour déterminer la durée d'injection et au même moment à une borne de positionnement d'un circuit à bascule bistable 620 qui fonctionne de manière à produire une impulsion de commande de la synchronisation déclenchant l'injection et de la durée de cette injection.

En réponse au signal d'entrée de positionnement H, le circuit à bascule 620 produit une sortie de haut niveau à la borne de sortie Q comme on le représente en N sur la fig. 5. Le bord avant du signal de sortie de haut niveau N correspond à l'instant du déclenchement de l'injection où le solenoïde de commande du dispositif 202 est excité pour faire démarrer l'opération d'ouverture de la soupape.

Le circuit à bascule 618 répond au signal d'entrée d'excitation H pour produire le signal G (fig. 5) à partir de sa borne Q. L'apparition du signal de sortie G coïncide avec le commencement de l'injection du combustible. Plus particulièrement, une porte «ET» 624 dont la borne d'entrée est alimentée par une impulsion d'horloge I (représentée en I sur la fig. 5) d'un générateur 622 est ouverte en réponse au signal de sortie G appliqué à l'autre borne d'entrée de la porte «ET» 624, de manière à ce que la sortie d'impulsion d'horloge I soit conduite au rythmeur 625. Le circuit à bascule 618 est adapté pour être restauré par l'impulsion de sortie provenant du circuit générateur 608 d'impulsions initiales.

Le rythmeur 626 de durée d'injection compte les impulsions d'horloge représentées en I sur la fig. 5 de manière à préparer un signal de durée K représenté en J sur la fig. 5. Ce rythmeur 626 est excité par le signal de sortie provenant du circuit générateur 608 d'impulsions initiales. Le signal de sortie K du rythmeur 626 est appliqué à une entrée du comparateur 628 dont l'autre borne d'entrée est alimentée par le signal de sortie L (voir en J sur la fig. 5) du registre de durée d'injection 606 pour servir comme valeur de référence de comparaison dans le comparateur 628.

Ainsi, quand le signal de sortie de comptage K du rythmeur 626 dépasse le niveau de sortie L du registre 606, le comparateur 628 produit une impulsion de sortie représentée en M sur la fig. 5. Le signal d'impulsion de sortie M est appliqué à une borne de restauration R du circuit à bascule 620 qui est ensuite restauré.

La bascule bistable 620 est disposée de telle sorte que le signal de sortie G est produit en réponse à la valeur de positionnement du registre 604 et possède une durée de temps jusqu'à la fin de la valeur de positionnement du registre à injection 606. Ainsi, le signal de sortie N (voir fig. 5) produit à la borne de sortie 630 du circuit à bascule bistable 620 constitue le signal de commande du dispositif à injection de combustible 202, lequel signal détermine les points de synchronisation ou de temps pour déclencher l'injection de combustible ainsi que la durée de cette injection en répondant de façon intermittente ou alternative aux temps d'aspiration successifs du moteur 1. La synchronisation ou instant d'ouverture de la soupape et la durée d'ouverture de la soupape à injection de combustible 202 sont positionnés par le signal de commande.

Le signal d'impulsion de sortie N (voir en N sur la fig. 5) est appliqué à une électrode de base d'un transistor d'attaque d'un circuit de commande (non représenté) du dispositif d'injection de combustible, de manière à brancher le transistor d'attaque pour commander le fonctionnement de l'ouverture de la soupape 202.

Le signal de commande d'injection qui commande la synchronisation ainsi que la durée de l'injection du combustible, déterminées par le CPU 502 pour être optimales afin d'obtenir une répartition uniforme du combustible dans les cylindres individuels, est fourni par le signal de sortie du circuit à bascule bistable 620 commandé par les signaux de temps ou signaux d'angle produits des comparateurs 616 et 628, qui servent à comparer les signaux de sortie du registre 604 et du registre 606 avec les sorties de comptage du rythmeur 612 et du rythmeur 626, respectivement.

De cette manière, le signal de commande d'injection de combustible est forcé de correspondre constamment aux conditions opérationnelles en cours d'exécution du moteur 1 sous commande du CPU 502 pour obtenir une synchronisation et une durée d'injection de combustible optimales. En conséquence, la commande de commutation de la soupape à injection de combustible 202 est réalisée de manière à uniformiser le rapport du répartition du combustible entre les cylindres individuels.

La fig. 6 illustre graphiquement les résultats expérimentaux concernant la relation entre l'angle de lancement et la vitesse d'injection du combustible telle qu'on l'a obtenue dans un dispositif d'essai construit un mode de réalisation de l'invention.

Sur cette fig. 6, le graphique (a) montre les résultats expérimentaux obtenus quand l'injection de combustible est déclenchée en synchronisme avec les lancements des temps d'aspiration dans les premier et quatrième cylindres, c'est-à-dire les points morts supérieurs de ces cylindres entre les temps d'aspiration successifs répétés dans l'ordre suivant: premier, trosième, quatrième et second cylindre.

Sur cette même fig. 6, le graphique (b) montre les résultats expérimentaux obtenus quand l'injection de combustible est déclenchée après un laps de temps prédéterminé ou angle de lancement à partir du point mort supérieur lors de l'aspiration des premier et quatrième cylindres, respectivement. On comprendra que les zones hachurées sur ces graphiques représentent les quantités de combustible alimentées aux cylindres associés.

Comme on peut le voir sur le graphique (a) de la fig. 5, les quantités de combustible fournies aux premier et quatrième cylindres deviennent légèrement plus grandes que celles fournies aux second et troisième cylindres, quand l'injection de combustible est déclenchée en synchronisme avec les points morts supérieurs des temps d'aspiration des premier et quatrième cylindres. La raison en est que le débit d'air à ce moment-là est insuffisant.

Au contraire, quand l'injection de combustible est déclenchée après un laps de temps prédéterminé ou angle de lancement à partir des points morts supérieurs dans les temps d'aspiration des premier et quatrième cylindres, le combustible est alimenté de façon uniforme dans tous les cylindres individuels, comme on peut le voir sur le graphique (b) de la fig. 6, parce que le combustible injecté est transporté par un courant d'air de débit suffisamment élevé vers les cylindres individuels.

La même chose s'applique au cas où le moteur tourne à haute vitesse. Plus particulièrement, quand le nombre de tours du moteur augmente, une quantité plus importante de combustible est nécessaire. Ce qui signifie que l'invervalle (ou durée de temps) durant lequel est injecté le combustible est accru.

En conséquence, le combustible fourni par injection à un seul coup tend à passer à travers les temps d'aspiration des cylindres individuels, comme c'est le cas représenté sur le graphique (a).

Sur la fig. 6, le graphique (c) montre les résultats expérimentaux obtenus quand l'injection de combustible est déclenchée en synchronisme avec les points morts supérieurs des temps d'aspiration des premier et quatrième cylindres dans le cas d'un moteur tournant à haute vitesse, décrit ci-dessus. Ce qui a été énoncé ci-dessus en relation avec le graphique (a) de la fig. 6 s'applique aussi à ce cas.

Sur la fig. 6, le graphique (d) montre les résultats expérimentaux obtenus en retardant la synchronisation ou temps de déclenchement d'injection de combustible pendant un angle de lancement prédéterminé ou un temps à partir du point mort supérieur des temps d'aspiration des premier et quatrième cylindres, comme dans le cas cité ci-dessus en relation avec le graphique (b). On peut voir ici que l'on a obtenu une répartition uniforme de combustible dans les cylindres individuels.

Sur les graphiques (c) et (d) de la fig. 5, la ligne en pointillés indique la répartition du combustible introduit par injection monocourse, tandis que la ligne en trait plein représente la répartition de la quantité de combustible ajoutée au combustible restant de l'injection précédente.

La synchronisation (ou instant) de déclenchement de l'injection pour uniformiser la répartition du combustible dans les cylindres individuels, c'est-à-dire la synchronisation de l'injection avec un retard correspondant à un angle de lancement prédéterminé ou laps de temps à partir du point mort supérieur dans le temps d'aspiration des premier et quatrième cylindres pour obtenir une répartition uniforme de combustible dans les cylindres individuels est déterminée par une expérience préalable et mémorisée dans le ROM 504 du système de commande 500 représenté sur la fig. 1. Dans la marche effective du moteur, la donnée de synchronisation déclenchant l'injection est lue du ROM 504 à utiliser pour établir effectivement la synchronisation optimale décrite ci-dessus.

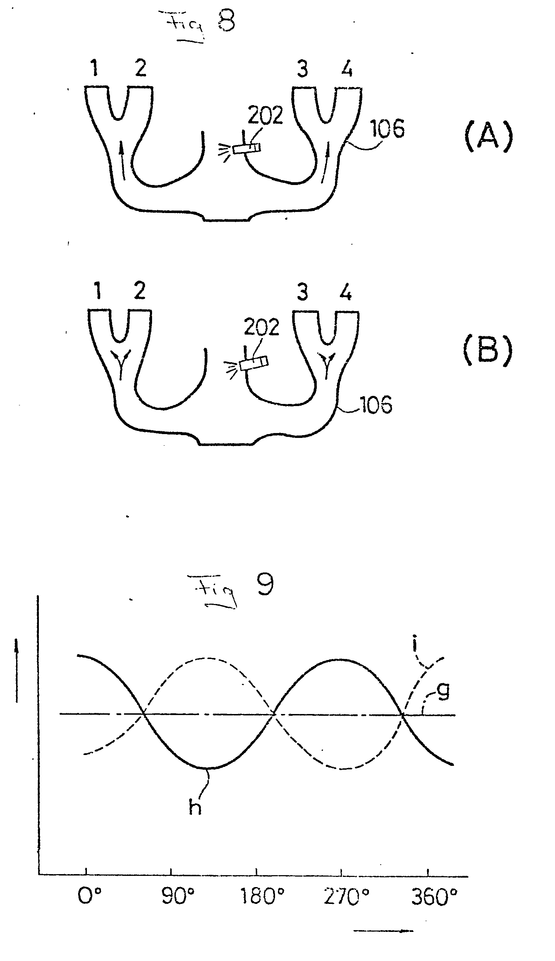

La fig. 7 est un diagramme qui représente, à titre d'exemples, les valeurs expérimentales de l'angle de lancement prédéterminé.

Sur cette figure, la concentration en combustible d'échantillons de mélange combustible-air est représentée en ordonnées, tandis que l'angle de lancement est pris en abscisses.

Pour la commodité de l'expérience, les graphiques représentés sur la fig. 7 montrent les variations de la concentration du mélange combustible-air comme une fonction de l'angle de lancement en deux étapes A et B. A l'étape A, l'injection de combustible est déclenchée en synchronisme avec les temps d'allumage et d'explosion des premier et quatrième cylindres, tandis qu'à l'étape B, l'injection de combustible est déclenchée en synchronisme avec les temps d'allumage et d'explosion des second et troisième cylindres.

Il faut noter que, comme le temps d'allumage et d'explosion diffère de 180°, en angle de lancement, du temps d'aspiration représenté sur la fig. 6, la direction de variation de la concentration en combustible de la fig. 7 doit être inversée sur la fig. 6.

Sur la fig. 7, la courbe en trait plein $f_1$, la courbe discontinue $f_2$, la courbe en tirets discontinus $f_3$ et la courbe en pointillés $f_4$ représentent, respectivement, les variations de la concentration en combustible du mélange introduit dans le premier cylindre No 1, le second cylindre No 2, le troisième cylindre No 3 et le quatrième cylindre No 4.

Comme on peut le voir sur cette fig. 7, le point où les concentrations des mélanges combustible-air alimentés aux premier et quatrième cylindres coïncident sensiblement l'une avec l'autre se trouve au voisinage de l'angle de lancement de 90° dans les temps d'aspiration des premier et quatrième cylindres, ce point étant indiqué par une flèche.

En conséquence, quand l'angle de lancement où les concentrations en combustible des mélanges sont introduites dans tous les cylindres individuels, par exemple un angle de lancement de 90°, est mémorisé au préalable dans le ROM 504, on peut obtenir une répartition uniforme de combustible dans ces cylindres individuels.

Cependant, il faut mentionner que l'angle de lancement où les concentrations en combustible du mélange combustible-air sont alimentées aux cylindres individuels subit des influences exercées par différents facteurs tels que la forme des chambres de combustion, la forme de la tubulure d'admission, l'importance des chevauchements entre les fonctionnements des soupapes de charge et de décharge, le nombre de tours du moteur, la pression dans le conduit ou tubulure d'admission, etc.

Pour cette raison, il est proposé de déterminer expérimentalement l'angle de lancement en question et de mémoriser la donnée correspondante dans une mémoire telle une mémoire morte pour assurer la synchronisation optimale du déclenchement de l'injection du combustible.

La description précédente a été faite sur l'hypothèse que l'injection du combustible était déclenchée en synchronisme avec les temps d'aspiration des premier et quatrième cylindres, dans le cas d'un moteur à quatre cylindres, quatre temps où les temps d'aspiration sont répétés dans l'ordre des premier, troisième, quatrième et second cylindres. Cependant, on appréciera qu'il peut intervenir un cas où l'injection de combustible soit de préférence déclenchée en synchronisme avec les temps d'aspiration des second et troisième cylindres quand les conditions de fonctionnement du moteur exigent un tel remplacement.

Plus particulièrement, dans le montage présent des cylindres individuels d'un moteur à quatre temps / quatre cylindres, les cylindres sont divisés en deux groupes qui communiquent l'un avec l'autre, comme on le représente de façon schématique sur la fig. 8. En conséquence, la manière selon laquelle le combustible injecté en synchronisation avec les temps d'aspiration de certains cylindres est réparti dans les cylindres individuels différera en fonction des cylindres particuliers dont le temps d'aspiration est utilisé comme référence pour l'injection synchrone.

Par exemple, quand l'injection de combustible est effectuée en synchronisme avec les temps d'aspiration des premier et quatrième cylindres d'un moteur à quatre temps / quatre cylindres – où les temps d'aspiration des cylindres individuels interviennent dans l'ordre des premier, second, troisième et quatrième cylindres (fig. 8A) – une fraction du combustible injecté au moment du temps d'aspiration du premier cylindre passera dans le troisième cylindre. De la même façon, une partie du combustible injecté au moment du temps d'aspiration du quatrième cylindre passera dans le second cylindre, ce qui signifie que le combustible, c'est-à-dire le mélange combustible-air dans un sens le plus strict, est divisé à l'entrée de la tubulure d'admission 106.

D'autre part, quand l'injection de combustible est réalisée en synchronisme avec les temps d'aspiration des second et troisième cylindres, une partie du combustible injecté au moment du temps d'aspiration du second cylindre passera dans le premier cylindre (Fig. 8B). De la même façon, une fraction du combustible injecté au moment de l'aspiration du troisième cylindre passera dans le quatrième cylindre. Ce qui signifie que la division du combustible injecté intervient entre les cylindres adjacents.

La division inverse du mélange combustible-air qui passe en une branche ou partie d'entrée de la tubulure d'admission 106 convient pour un régime à petite vitesse du moteur, parce qu'un temps suffisant de vaporisation du combustible peut être alors assuré.

D'autre part, la division de combustible entre les cylindres adjacents, comme on le représente sur la fig. 8B, représente une répartition efficace de combustible injecté pour un régime à grande vitesse du moteur qui nécessite une introduction de combustible à haute fréquence avec une précision raisonnable pour les cylindres individuels.

De cette manière, et en fonction des conditions de fonctionnement du moteur, la sélection peut être faite de savoir si le déclenchement de l'injection du combustible doit être synchronisée avec les temps d'aspiration des premier et quatrième cylindres ou avec ceux des second et troisième cylindres.

Une telle sélection des manières d'injecter le combustible peut être réalisée en utilisant le signal de sortie du détecteur de $O_2$ disposé dans le tuyau d'échappement 402 représenté sur la fig. 1.

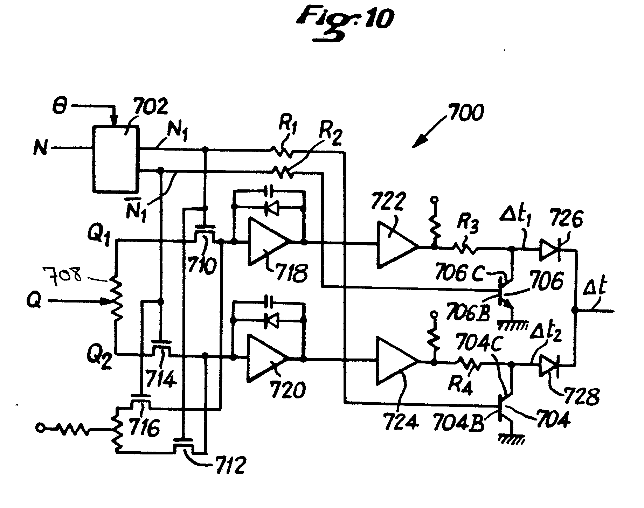

La fig. 9 illustre graphiquement la relation entre l'angle de lancement et le signal de sortie du détecteur de $O_2$. La ligne en pointillés g représente la valeur optimale (constante) de la sortie du détecteur de $O_2$ sur tout l'angle de lancement, mémorisé au préalable dans le ROM 504 du système de commande 500 de la fig. 1.

Si l'on suppose maintenant que la sortie du détecteur de $O_2$ varie suivant la courbe en trait plein h durant une seule rotation du vilebrequin dans l'état de marche du moteur, la sélection sera telle que le déclenchement de l'injection du combustible, effectuée en synchronisme avec les temps d'aspiration des premier et quatrième cylindres, sera modifié de manière à être réalisé en synchronisme avec les temps d'aspiration des second et troisième cylindres. Alors, la forme d'onde du signal de sortie du détecteur de $O_2$ modifiera sa courbe en trait plein h en courbe i indiquée en pointillés. Ainsi, le signal de sortie du détecteur de $O_2$, après le mouvement de va-et-vient des cylindres de référence pour la synchronisation de l'injection de combustible, se rapproche de la valeur initiale g.

Dans ce cas, la variation de sortie représentée par la courbe h approche la valeur initiale g en faisant dévier la synchronisation déclenchant l'injection de combustible d'un petit angle de rotation.

La sélection ou permutation des façons d'injecter le combustible, décrites ci-dessus, peut être effectuée en détectant que le nombre de tours du moteur 1 a augmenté au-delà d'une valeur prédéterminée, ou en détectant que la pression dans le conduit d'admission ou l'ouverture du papillon, représentative du nombre de tours du moteur, a atteint le niveau ou angle prédéterminés, ou d'une autre façon en utilisant le signal de sortie du détecteur à fil chaud qui sert à détecter la quantité d'air aspiré.

En bref, l'une de ces valeurs détectées peut être comparée avec les valeurs initiales associées mémorisées dans le ROM 504 du système de commande 500 de manière à identifier l'état de fonctionnement actuel du moteur, c'est-à-dire savoir si le moteur est en régime à grande vitesse ou à petite vitesse et en conséquence réaliser la permutation des deux modes d'injection du combustible, décrits ci-dessus.

La synchronisation pour permuter les modes d'injection du combustible doit être, de préférence, déterminée en considérant aussi la forme du conduit ou tubulure d'admission 106, la forme de la chambre à combustion formée dans les cylindres individuels, la forme de la soupape de charge ou d'autres facteurs qui exercent aussi des influences sur la répartition du combustible.

En se référant aux figures 10 et 11, on décrira maintenant un montage d'un exemple de circuit du système de commande d'injection de combustible qui fonctionne sur la base du principe mentionné ci-dessus.

Quand un signal d'angle de lancement θ (fig. 11) produit du détecteur 314 représenté sur la fig. 1 (ce signal correspond au signal d'impulsion initiale représenté sur la fig. 5 en C qui est produit par le circuit générateur 608 de la fig. 4 en fonction des temps d'aspiration des premier et quatrième cylindres) et un signal du nombre de tours N (produit en synchronisme avec le signal d'angle de lancement de référence CRP fourni au circuit générateur 608 de la fig. 4) sont fournis à une bascule 702, une paire de signaux de sortie $N_1$ et $\overline{N_1}$ (voir en $N_1$ et $\overline{N_1}$ sur la fig. 11) est produite de la bascule 702.

L'un des signaux de sortie $N_1$ et $\overline{N_1}$ (dans ce cas, le signal $N_1$) est appliqué à une électrode de base 704B d'une transistor 704 par l'intermédiaire d'une résistance $R_1$, tandis que l'autre signal $\overline{N_1}$ est appliqué à une électrode de base 706B d'un transistor 706 par l'intermédiaire d'une résistance $R_2$.

D'autre part, un signal du débit d'air Q détecté comme une quantité analogique du détecteur à fil chaud 116 est appliqué à une résistance variable 708 et divisé en deux signaux $Q_1$ et $Q_2$ qui apparaissent aux deux extrémités de la résistance variable 708. Le rapport de division des deux signaux $Q_1$ et $Q_2$ est déterminé au préalable sur la base du signal de sortie du détecteur 406 de $O_2$ ou analogues de sorte que la quantité de combustible, c'est-à-dire, le rapport combustible-air du mélange réparti dans les cylindres individuels, devienne uniforme ou optimale pour tous ces cylindres.

Les signaux $Q_1$ et $Q_2$ sont respectivement appliqués à des intégrateurs 718 et 720 par l'intermédiaire de grilles associées 710, 712 et 714, 716 qui sont respectivement commandées par les signaux de sortie $N_1$ et $\overline{N_1}$ du circuit à bascule 702.

Les signaux de sortie des deux intégrateurs 718 et 720 sont appliqués aux électrodes de captage 760C et 704C de transistors 706 et 704 par l'intermédiaire de résistances $R_3$ et $R_4$.

Les signaux de durée de temps $\Delta t_1$ et $\Delta t_2$ représentés sur la fig. 11 sont produits des bornes de sortie des transistors 706 et 704.

En fonction de la position d'impulsion du signal d'angle de lancement, constitué par des impulsions dont chacune est produite à chaque rotation complète du vilebrequin (figs 11, θ), on peut différencier les temps d'aspiration des premier et quatrième cylindres de ceux des second et troisième cylindres. Quand le signal d'angle de lancement θ représenté sur la fig. 11 correspond au temps d'aspiration des premier et quatrième cylindres, l'impulsion $\Delta t_1$ correspond au temps d'aspiration des second et troisième cylindres, tandis que l'impulsion $\Delta t_2$ correspond au temps d'aspiration des premier et quatrième cylindres.

Ces signaux de sortie $\Delta t_1$ et $\Delta t_2$ sont ajoutés l'un à l'autre par l'intermédiaire de diodes respectives 726 et 728, de manière à constituer un signal de sortie final Δt.

La largeur d'impulsion du signal de sortie Δt ainsi obtenu du circuit de commande 700 est donnée par l'expression suivante:

$$\Delta t = K \cdot \frac{Q}{N} \qquad (1)$$

dans laquelle K représente une constante proportionnelle.

Grâce à ce signal de sortie Δt, la durée d'excitation Δτ de la soupape électromagnétique ou solénoïde du dispositif 202 d'injection de combustible est commandée en relation avec le temps d'aspiration du cylindre individuel.

La durée d'excitation Δt du solénoïde correspondant au temps d'aspiration du cylindre individuel est préétablie en fonction du rapport de division des deux signaux $Q_1$ et $Q_2$ obtenus en divisant le signal de débit d'air Q par la résistance variable 708. Le rapport de division, à son tour est déterminé sur la base du signal de sortie du détecteur 406 de $O_2$ placé dans le tuyau d'échappement 402.

Par exemple, si l'on suppose que le rapport combustible-air du mélange introduit dans les premier et quatrième cylindres est supérieur à celui du mélange introduit dans les second et troisième cylindres, le rapport de division pour produire les deux signaux $Q_1$ et $Q_2$ sera choisi de telle sorte que la durée d'injection $\Delta t_2$ aux temps d'aspiration des premier et quatrième cylindres soit plus grande que la durée d'injection $\Delta t_1$ aux temps d'aspiration des second et troisième cylindres, de manière à rendre uniforme le rapport combustible-air du mélange alimenté aux cylindres individuels.

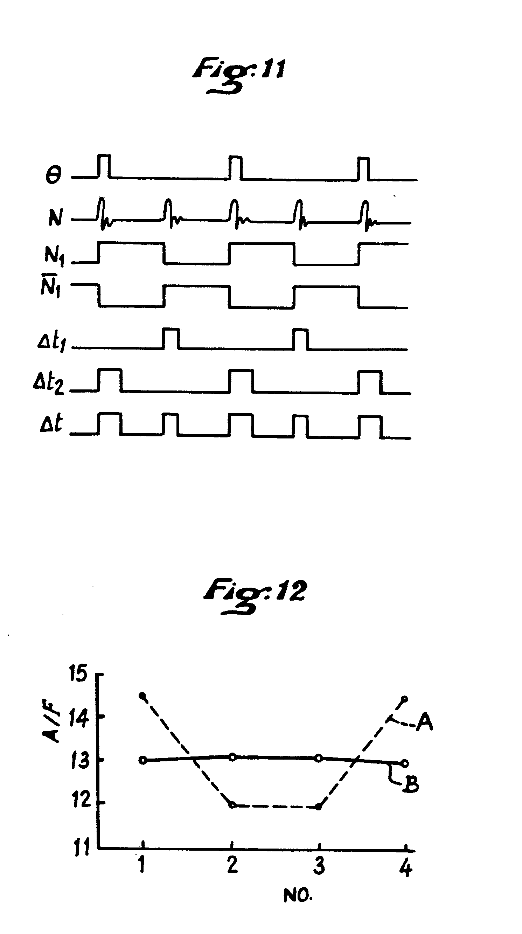

Les résultats expérimentaux obtenus dans un moteur à quatre cylindres/quatre temps, tournant à 1200 tours/minute, sont représentés graphiquement sur la fig. 12. On peut d'ailleurs y voir que la répartition du rapport combustible-air, obtenue dans le système d'injection décrit ci-dessus et représentée par une courbe B, est beaucoup plus uniforme que celle obtenue dans un système d'injection classique représentée par une courbe A.

Sur cette fig. 12, les cylindres individuels numérotés 1 à 4 sont en abscisses et le rapport combustible-air (A/F) en ordonnées.

Bien que la description précédente ait porté sur un moteur à combustion interne du type à quatre temps et à quatre cylindres, on appréciera que la présente invention n'est pas du tout limitée à un tel moteur mais qu'elle peut s'appliquer également à un moteur à six cylindres ou à huit cylindres.

Dans le cas du moteur à six cylindres, la synchronisation ainsi que la durée d'injection du combustible peuvent être commandées de manière à assurer une répartition uniforme de combustible dans les cylindres individuels, en réglant la synchronisation déclenchant l'injection et la durée de cette injection en fonction des conditions de marche.

## Revendication

Procédé de commande du système à injection de combustible pour un moteur à combustion interne (1) comportant une pluralité de paires de cylindres (300), et un dispositif (202) à soupape d'injection unique servant à envoyer le combustible à la pluralité des cylindres (300) du moteur à combustion, consistant à:
- produire un premier signal indicatif d'au moins un paramètre d'état du moteur relatif au débit d'air d'aspiration, á l'angle du vilebrequin et à la température du fluide de refroidissement,
- mémoriser une donnée de cadencement de l'injection uniforme de combustible afin d'obtenir une distribution uniforme de combustible aux cylindres individuels (300) du moteur en fonction de l'état d'opération ou de fonctionnement de ce dernier,
- déterminer un instant de déclenchement de l'injection de combustible en réponse au premier signal et à la donnée de cadencement uniforme d'allumage,
- injecter le combustible depuis la soupape unique d'injection de combustible (202) à l'instant de déclenchement,
caractérisé en ce que le combustible est injecté en correspondance de chaque groupe de deux courses d'aspiration successives de la pluralité des paires de cylindres (300) et est injecté au voisinage de l'angle de 90° du vilebrequin, après le point mort haut du premier des deux cylindres de la paire effectuant son aspiration.

## Claim

Method of controlling the fuel injection system for an internal combustion engine (1) comprising a plurality of pairs of cylinders (300) and a device (202) with a single injection valve serving to deliver the fuel to the plurality of cylinders (300) of the internal combustion engine, comprising:
- producing a first signal representing at least one parameter of state of the engine relative to the flow of suction air, the crankshaft angle, and the temperature of the cooling fluid,
- storing a uniform fuel injection rate date item for obtaining uniform distribution of fuel to the individual cylinders (300) of the engine in accordance with the working or operating state of the latter,
- determining an instant for triggering fuel injection in response to the first signal and to the uniform ignition rate date item,
- injecting the fuel from the single fuel injection valve (202) at the instant of triggering,
characterised in that the fuel is injected in correspondence with each group of two successive suction strokes of the plurality of pairs of cylinders (300) and is injected in the vicinity of the 90° crankshaft angle, after the top dead centre of the first of the two cylinders of the pair effecting its suction operation.

**Patentanspruch**

Verfahren zur Steuerung eines Kraftstoff-Einspritzsystems für eine Brennkraftmaschine (1) mit mehreren Paaren von Zylindern (300) und einer einzigen Einspritzventil-Einrichtung (202) zur Zuführung des Kraftstoffs an die verschiedenen Zylinder (300) der Brennkraftmaschine, umfassend:

Erzeugen eines ersten Signals, das mindestens einen Parameter des Maschinenzustands bezüglich der angesaugten Luftmenge, dem Winkel der Kurbelwelle und der Temperatur des Kühlfluidums angibt,

Speichern einer der gleichmässigen Kraftstoffeinspritzfolge entsprechenden Grösse zur Erzielung einer gleichmässigen Kraftstoffverteilung auf die einzelnen Zylinder (300) der Maschine als Funktion von deren Arbeitszustand oder Betrieb,

Bestimmen eines Auslösezeitpunkts für die Kraftstoffeinspritzung in Abhängigkeit von dem ersten Signal und der der gleichässigen Zündfolge entsprechenden Grösse,

Einspritzen des Kraftstoffs über das einzige Kraftstoff-Einspritzventil (202) zum Auslösezeitpunkt,

dadurch gekennzeichnet, dass der Kraftstoff entsprechend jeder Gruppe von zwei aufeinanderfolgenden Ansaughüben der verschiedenen Paare von Zylindern (300) und im Bereich eines Winkels von 90° der Kurbelwelle hinter dem oberen Totpunkt des ersten der beiden Zylinder des im Ansaughub befindlichen Zylinderpaars eingespritzt wird.

Fig. 1

0 016 843

Fig. 2

Fig. 3

Fig 4

Fig 5

A (CRP)
B (CPP)
C
D
G
H
I
J
M
N

Fig. 6

(a)

(b)

(c)

(d)

0°   180°   360°   540°   720°

Fig. 7

$f_4$

$f_1$

$f_2$

$f_3$

0°   90°   180°   270°   360°

Fig 8

(A)

(B)

Fig 9

# Fig. 10

Fig.11

Fig.12